# FASCICULE DE BREVET EUROPEEN

(11) **EP 2 257 764 B1**
(45) Date de publication et mention de la délivrance du brevet: **09.07.2014**
(21) Numéro de dépôt: 09720954.8
(22) Date de dépôt: 12.03.2009
(51) Int. Cl.: G01B 5/02, G01B 11/03, B65G 1/04, B65G 47/28, B65G 47/90

(54) **PROCÉDÉ ET DISPOSITIF DE MESURE ET DE POSITIONNEMENT D'OBJETS**
VERFAHREN UND VORRICHTUNG ZUR MESSUNG UND POSITIONIERUNG VON OBJEKTEN
METHOD AND DEVICE FOR MEASURING AND POSITIONING OBJECTS

(30) Priorité: 14.03.2008 LU 91421
(43) Date de publication de la demande: 08.12.2010
(73) Titulaire: Pharmatechnik Unternehmensberatung S.A., 2449 Luxembourg (LU)
(72) Inventeur: ZIMMERMAN, Klemens, 56427 Siershahn (DE); VANDERGHOTE, Hendrik, B-8900 Ieper (BE)
(74) Mandataire: Office Freylinger
(86) Numéro de dépôt international: PCT/EP2009/052895
(87) Numéro de publication internationale: WO 2009/112540

(56) Documents cités:
- EP-A- 1 748 004
- FR-A- 2 391 131
- GB-A- 2 167 211
- US-A- 5 171 120

## Description

### Introduction

L'invention concerne un procédé et un dispositif de mesure et de positionnement d'un objet qui présente la forme d'un cube, d'un parallélépipède rectangle, d'un cylindre ou d'un prisme droit, avec comme surface de base la surface d'un polygone régulier à nombre pair de côtés, les dimensions de l'objet étant déterminées, et dans lequel après la détermination de la longueur ou de la largeur de l'objet, l'objet est tourné à l'aide d'un plateau rotatif pour déterminer respectivement sa largeur ou sa longueur.

### Etat de la technique

Un cube ou un parallélépipède rectangle sont des figures spatiales connues et chaque face de ces figures spatiales peut constituer une surface de base. Par cylindre, on entend ici une figure spatiale qui possède comme surface de base un cercle ou une ellipse et qui présente perpendiculairement à un axe une section transversale qui correspond globalement au même cercle ou à la même ellipse. Un prisme droit est une figure spatiale qui présente un même polygone comme surface de base et surface supérieure et des rectangles comme faces latérales. Lors de la détermination des dimensions d'un cube, d'un cylindre dont la surface de base est un cercle ou d'un prisme droit dont la surface de base est un polygone régulier à nombre pair de côtés, on constatera en effet que la longueur et la largeur de la surface de base d'une telle figure spatiale sont égales l'une à l'autre.

La mesure et le positionnement d'un objet qui présente les caractéristiques mentionnées ci-dessus sont souhaités surtout lorsque de tels objets sont placés dans un magasin automatique. Un tel magasin est par exemple utilisé fréquemment pour le stockage d'emballages de médicaments. Pour utiliser de manière optimale l'espace présent dans le magasin, il est indiqué de déterminer les dimensions de ces objets et de placer ces objets dans l'orientation la plus indiquée dans l'espace prévu à cet effet dans le magasin.

Un tel magasin automatique pour emballages de médicaments est décrit par exemple dans le document EP 0 620 528. Le magasin décrit comprend plusieurs étagères qui sont remplies systématiquement dans une succession et une détermination de l'emplacement commandées par ordinateur.

Certains dispositifs ont déjà été mis au point pour la mesure et le positionnement d'objets en forme de parallélépipède rectangle de manière à pouvoir les placer ensuite de manière judicieuse dans un tel magasin.

Dans un premier système, les dimensions de l'objet sont déterminées à l'aide d'une reconnaissance de forme basée sur des images prises par caméra. Des dispositifs de manipulation prennent les emballages et les positionnent. Ces systèmes qui utilisent des caméras constituent une solution coûteuse de mesure et de positionnement d'objets.

Le dispositif et le procédé correspondant de mesure et de positionnement d'emballages rectangulaires décrits dans le document EP 1 748 004 ont été mis au point comme alternative à cette solution coûteuse. Dans ce dispositif, chaque emballage est serré entre deux fourches pour déterminer la longueur ou la largeur de l'emballage. Après détermination de la longueur ou de la largeur de l'emballage, cet emballage est tourné de 90° à l'aide d'un plateau rotatif pour déterminer respectivement sa largeur ou sa longueur. Sa hauteur est ensuite déterminée à l'aide d'un détecteur de hauteur.

Le dispositif divulgué par le document EP 1 748 004 présente un assez grand nombre de composants mécaniques, de sorte que le risque de défaillance de l'installation en cas de défaillance d'un de ces composants est assez élevé. Un grand désavantage supplémentaire de cette installation est que lors de la mesure de sa longueur et de sa largeur, chaque emballage est serré entre lesdites fourches. Le risque qu'un emballage soit endommagé ou s'ouvre lors de ce serrage est assez élevé.

### Objet de l'invention

Le problème à la base de la présente invention consiste à prévoir un procédé et un dispositif simples de mesure et de positionnement d'un objet qui présentent les caractéristiques mentionnées plus haut mais qui ne présentent pas les désavantages mentionnés plus haut de l'état de la technique.

Cet objet de l'invention est réalisé en premier lieu en proposant le mode de réalisation défini dans la première revendication.

### Description générale de l'invention revendiquée avec ses principaux avantages.

Avec ce procédé, l'objet peut être manipulé pendant sa mesure et son positionnement sans que l'objet soit serré, de sorte qu'il sera endommagé moins vite ou qu'un objet présentant la forme d'un emballage s'ouvrira moins vite que c'est le cas dans l'état de la technique.

Sur un cylindre, un côté de la surface de base est en réalité un point de l'extension du cercle ou de l'ellipse qui forme la surface de base.

La détermination de la hauteur peut s'effecteur sélectivement avant, pendant ou après les étapes 1 à 4 incluses.

L'angle de rotation sur lequel l'objet est tourné vaut de préférence sensiblement 90°. De cette manière, on peut réaliser l'étape 4a de façon particulièrement commode, sans trop de manipulations de l'objet.

L'étape 1 de ce procédé comprend de préférence les étapes partielles suivantes :
a. amenée au moins partielle de l'objet sur le plateau rotatif,
b. à l'aide du déplacement de deux éléments de déplacement qui se déplacent simultanément, qui sont prévus à distance constante l'un de l'autre et qui délimitent une zone rectangulaire plus grande que l'objet à mesurer et positionner et/ou la rotation du plateau rotatif, déplacer l'objet jusqu'à ce qu'il repose sur sa surface de base et
c. à l'aide du déplacement des éléments de déplacement et/ou de la rotation du plateau rotatif, déplacer l'objet jusqu'à ce qu'il soit complètement situé sur le plateau rotatif.

Lorsque l'objet est placé, l'objet peut être situé en partie à côté du plateau rotatif, ou l'objet peut être posé sur un autre côté que sa surface de base, etc. Par déplacement et rotation de l'objet, on peut garantir que l'objet soit posé sur le plateau rotatif par sa surface de base lors du lancement de l'étape 2. Cela peut être réalisé de plusieurs manières que l'on décrira plus loin dans la description détaillée.

Dans les étapes 2a et 4a, l'objet est déplacé de préférence à l'aide de deux éléments de déplacement qui se déplacent simultanément, qui sont prévus à distance constante l'un de l'autre et qui délimitent une zone rectangulaire plus grande que l'objet qui doit être mesuré et positionné, les côtés de cette ouverture rectangulaire étant parallèles à la première et la troisième ligne de référence, jusqu'à ce que le premier ou le troisième côté de cette ouverture soit situé respectivement le long de la première ou de la troisième ligne de référence.

En manipulant l'objet uniquement à l'aide de ces éléments de déplacement et d'un plateau rotatif, on peut mesurer et positionner l'objet sans que cet objet soit jamais serré.

Dans un mode de réalisation particulier de ce procédé, l'objet est déplacé à l'étape 2a et à l'étape 4a à l'aide d'éléments de déplacement jusqu'au-dessus du point central du plateau rotatif et ensuite reculé dans la direction opposée jusqu'à ce que son premier ou son troisième côté soit situé le long de la ligne centrale du plateau rotatif qui sert respectivement de première ou de troisième ligne de référence. Un objet situé initialement à un angle relativement grand par rapport à la première ou à la troisième ligne de référence viendra avec certitude se placer le long de cette ligne de référence après ce déplacement dans deux directions.

Pour simplifier le positionnement de l'objet, dans un mode de réalisation avantageux du procédé selon la présente invention, après l'étape 2, l'objet est déplacé à l'aide des éléments de déplacement jusqu'à ce que la surface de base de l'objet soit située symétriquement par rapport à la première ligne de référence.

De cette manière, après la rotation et lors du déplacement de l'objet à l'état 4 à l'aide des éléments de déplacement, on peut maintenir l'objet sur le plateau rotatif.

Dans un autre mode de réalisation particulier du procédé selon la présente invention, pendant les étapes 1 à 4 incluses, l'objet est identifié à l'aide de moyens d'identification. De manière plus particulière, ladite identification peut comprendre la lecture à l'aide d'un lecteur de codes à barres d'un code à barres placé sur l'objet.

De cette manière, non seulement on détermine les dimensions de l'objet, mais on peut également identifier l'objet, de sorte que l'on peut retenir quel produit de quelles dimensions est présent en tout emplacement du magasin. La seule identification de l'objet ne suffit pas pour connaître également les dimensions du produit. Dans le cas de médicaments, de nombreux produits conditionnés en différentes quantités sont disponibles dans des emballages de dimensions différentes.

Si le produit a la forme d'un parallélépipède rectangle et si la hauteur mesurée est supérieure à la longueur et/ou à la largeur mesurées, ce mode de réalisation comprend en outre et de préférence une étape supplémentaire qui consiste à culbuter ce colis en faisant tourner l'objet à l'aide du plateau rotatif et en percutant l'objet à l'aide des éléments de déplacement. De cette manière, l'objet de forme parallélépipédique sera placé sur sa plus grande surface comme surface de base. Ainsi, on peut toujours placer des objets de forme parallélépipédique dans une même orientation connue pour les placer dans un magasin dans cette orientation.

Après l'exécution desdites étapes, dans un autre mode de réalisation particulier du procédé selon la présente invention, l'objet est placé au milieu du plateau rotatif en faisant tourner l'objet à l'aide du plateau rotatif et/ou en déplaçant l'objet à l'aide des éléments de déplacement, de telle sorte que le sens de la longueur ou de la largeur de l'objet soient parallèles à une ligne de référence.

Cet objet de l'invention est en outre également obtenu en proposant dans un dispositif de mesure et de positionnement d'objets en forme de cube, de parallélépipède rectangle, de cylindre ou de prisme droit dont la surface de base est un polygone régulier à nombre pair de côtés, selon un procédé décrit plus haut, ce dispositif comprenant :
a. un dispositif d'amenée qui amène sur le plateau rotatif un objet à mesurer et positionner,
b. un plateau rotatif dont les dimensions sont telles que pendant les étapes 2 à 4 incluses du procédé, l'objet se trouve sur ce plateau rotatif,
c. deux éléments de déplacement qui se déplacent simultanément, qui sont prévus à distance constante l'un de l'autre et qui délimitent une zone rectangulaire plus grande que l'objet à mesurer et positionner, et par lesquels l'objet est déplacé, les côtés de cette ouverture rectangulaire étant parallèles à la première et à la troisième ligne de référence,
d. un détecteur de présence pour détecter la présence de l'objet pendant l'étape 2b et l'étape 4b et
e. un détecteur de hauteur pour déterminer la hauteur de l'objet.

Dans un mode de réalisation particulier d'un dispositif selon la présente invention, lesdits éléments de déplacement font également partie du dispositif d'amenée.

Pour obtenir un mode de réalisation simple qui permet de prévoir un minimum de pièces mécaniques dans un dispositif selon la présente invention, lesdits éléments de déplacement font de préférence partie d'un bâti.

Ledit détecteur de présence est de préférence prévu fixement sur les éléments de déplacement. La première ligne de référence et la troisième ligne de référence peuvent alors être sélectionnées fixement dans l'espace, tandis que les éléments de déplacement sont déplacés vers la pièce pour, lors de la détection de la pièce à l'aide du détecteur de présence, définir respectivement la deuxième ligne de référence et la quatrième ligne de référence.

Ce détecteur de présence peut cependant aussi être placé fixement dans l'espace, et dans ce cas l'objet est déplacé vers le détecteur de présence à l'aide des éléments de déplacement. La ligne de contact entre un élément de déplacement et l'objet peut alors être appelée première ou troisième ligne de référence, et lorsque l'objet est détecté à l'aide du détecteur de présence placé fixement dans l'espace, respectivement la deuxième et la quatrième ligne de référence sont définies.

Dans un premier mode de réalisation particulier d'un dispositif selon la présente invention, ledit détecteur de hauteur est placé fixement à une certaine hauteur au-dessus du centre du plateau rotatif. Dans un autre mode de réalisation particulier, ledit détecteur de hauteur est prévu sur les éléments de déplacement à une certaine hauteur au-dessus de la surface du plateau rotatif.

Un mode de réalisation préféré d'un dispositif selon la présente invention comporte des moyens d'identification qui permettent d'identifier l'objet. Ces moyens d'identification comprennent de préférence un lecteur de codes à barres pour identifier l'objet par lecture d'un code à barres prévu sur cet objet.

### Brève description des Figures

La présente invention va maintenant être expliquée plus en détail à l'aide de la description détaillée qui suit d'un mode de réalisation préféré du dispositif et du procédé de mesure et de positionnement d'un objet selon la présente invention. Le but de cette description est exclusivement de donner des exemples explicatifs et de montrer d'autres avantages et particularités de ce dispositif et de ce procédé, et elle ne peut donc d'aucune manière être interprétée comme constituant une limitation du domaine d'utilisation de l'invention ou des droits de protection revendiqués dans les revendications.

Dans cette description détaillée, on se réfère à l'aide de références numériques aux figures annexées, parmi lesquelles :
la figure 1 représente une vue depuis le haut d'un dispositif de mesure et de positionnement d'un objet de forme parallélépipédique selon la présente invention,
la figure 2 représente une vue en perspective du dispositif de la figure 1 et
les figures 3 à 12 incluses représentent schématiquement un procédé de mesure et de positionnement d'un objet de forme parallélépipédique selon la présente invention.

### Description détaillée d'un mode de réalisation avantageux de l'invention

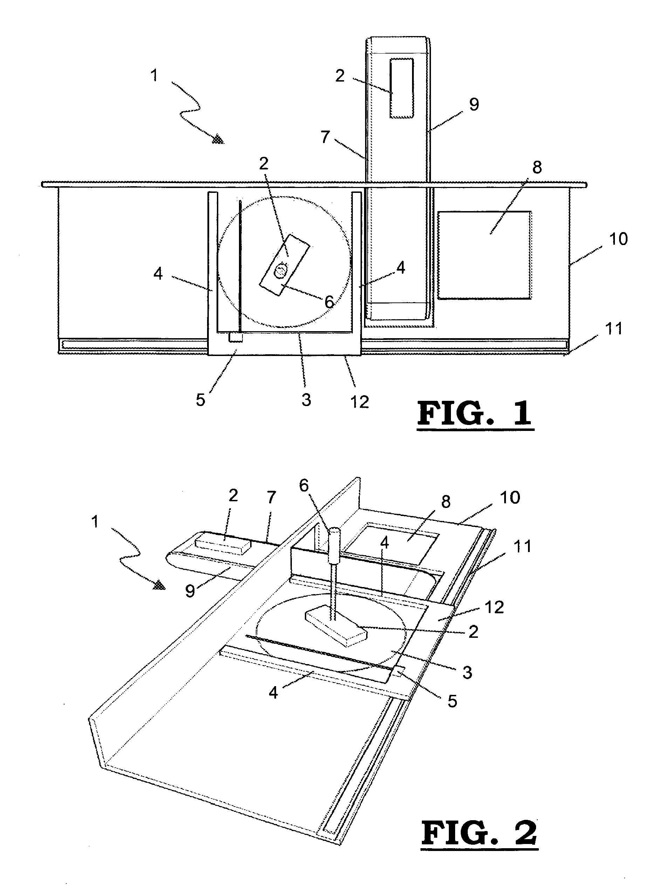

Dans les figures 1 et 2, on a représenté un dispositif (1) selon la présente invention pour la mesure et le positionnement d'un objet (2) en forme de cube, de parallélépipède rectangle, de cylindre ou de prisme droit dont la surface de base est un polygone régulier à nombre pair de côtés.

Ce dispositif (1) comprend :
- un dispositif d'amenée (7) qui amène sur un plateau rotatif (3) un objet (2) à mesurer et positionner,
- un plateau rotatif (3) dont les dimensions sont telles que l'objet (2) est placé sur le plateau rotatif (3) lors de ses manipulations au cours de la détermination de ses dimensions,
- deux éléments de déplacement (4) qui se déplacent simultanément, prévus à distance constante l'un de l'autre et qui délimitent une zone rectangulaire plus grande que l'objet (2) à mesurer et positionner, et par lesquels cet objet (2) est déplacé,
- un détecteur de présence (5) pour détecter la présence de l'objet (2) et
- un détecteur de hauteur (6) pour déterminer la hauteur de l'objet (2).

Ledit dispositif d'amenée (7) comprend d'une part une bande transporteuse (9) par laquelle un objet (2) est amené jusque devant le plateau rotatif (3) dans le plan de ce plateau rotatif (3). Le plateau rotatif (3) est situé dans le plan d'un panneau de travail (10) et est ensuite incorporé sur ce panneau de travail (10). La bande transporteuse (9) est située également dans le plan de ce panneau de travail (10) et ensuite sur ce panneau de travail (10). Ce dispositif d'amenée (7) comprend d'autre part lesdits éléments de déplacement (4). Ces éléments de déplacement (4) peuvent être déplacés dans un profilé de guidage (11) prévu dans le panneau de travail (10). Pour amener un objet (2) sur le plateau rotatif (3), on déplace d'abord les éléments de déplacement (4) jusqu'à ce qu'ils soient situés des deux côtés de la bande transporteuse (9). A l'aide de la bande transporteuse (9), l'objet (2) est amené entre les éléments de déplacement (4). Ensuite, les éléments de déplacement (4) déplacent l'objet (2) jusqu'à ce qu'il vienne se placer au moins en partie sur le plateau rotatif (3).

Ce dispositif d'amenée (7) pourrait cependant être réalisé de nombreuses autres manières. L'objet (2) pourrait par exemple pouvoir être amené depuis le haut sur le plateau rotatif (3). De tels dispositifs d'amenée (7) font partie de l'état de la technique, de sorte que l'on ne s'y étendra pas davantage.

Dans ce dispositif (1), lesdits éléments de déplacement (4) font partie d'un bâti (12) ouvert sur un côté. Dans les figures, le détecteur de présence (5) est prévu fixement sur ce bâti (12).

Ainsi qu'on l'indiqué plus haut, le détecteur de présence (5) pourrait également être placé fixement dans l'espace, et dans ce cas l'objet (2) devra être déplacé à l'aide des éléments de déplacement (4) vers le détecteur de présence (5) pour en définir la longueur et la largeur de la surface de base. La ligne de contact entre un élément de déplacement (4) et l'objet (2) peut alors être appelée première ou troisième ligne de référence, tandis que lorsque l'objet (2) est détecté à l'aide du détecteur de présence (5) placé fixement dans l'espace, c'est respectivement la deuxième ou la quatrième ligne de référence qui sont définies. La manière suivant laquelle ces variantes de réalisation peuvent être réalisées sera claire pour un homme du métier après lecture du mode de réalisation décrit plus loin d'un dispositif (1) et du procédé selon la présente invention, de sorte que nous ne nous y étendrons pas davantage ici.

Comme détecteur de présence (5), on peut utiliser par exemple un détecteur laser ou un détecteur à ultrasons. Dans les figures, on a représenté le rayon émis par un tel détecteur.

Ledit détecteur de hauteur (6) est placé fixement à une certaine hauteur au-dessus du centre du plateau rotatif (3). Dans une variante de réalisation du présent dispositif (1), ce détecteur pourrait tout aussi bien être prévu sur le bâti (12) à une certaine hauteur au-dessus du plan du plateau rotatif (3). Comme détecteur de hauteur (6), on peut utiliser par exemple un détecteur laser ou un détecteur à ultrasons doté d'un émetteur et d'un récepteur. Lorsque l'on détermine la hauteur d'un objet (2) qui présente la forme d'un emballage réfléchissant, on utilisera de préférence un détecteur à ultrasons.

En outre, un dispositif (1) selon la présente invention peut comprendre des moyens d'identification qui identifient l'objet (2). Ces moyens d'identification font également partie des connaissances d'un homme du métier.

Une ouverture (8) par laquelle l'objet (2) est évacué après avoir été mesuré et positionné est également prévue dans le panneau de travail (10) de ce dispositif (1). Dans ce but, l'objet (2) est déplacé par le bâti (12) jusqu'au-delà de la bande transporteuse (9) et dans l'ouverture (8). Dans cette ouverture (8), par exemple un dispositif d'évacuation peut se raccorder sous une pente à cette ouverture (8). Un tel dispositif d'évacuation peut être réalisé de nombreuses manières. L'objet (2) ne doit pas nécessairement être évacué par une ouverture (8) telle que celle que l'on a représentée, et il peut par exemple être amené sur une deuxième bande transporteuse. Ces dispositifs d'évacuation font également partie de l'état de la technique, de sorte que l'on ne s'y étendra pas davantage ici.

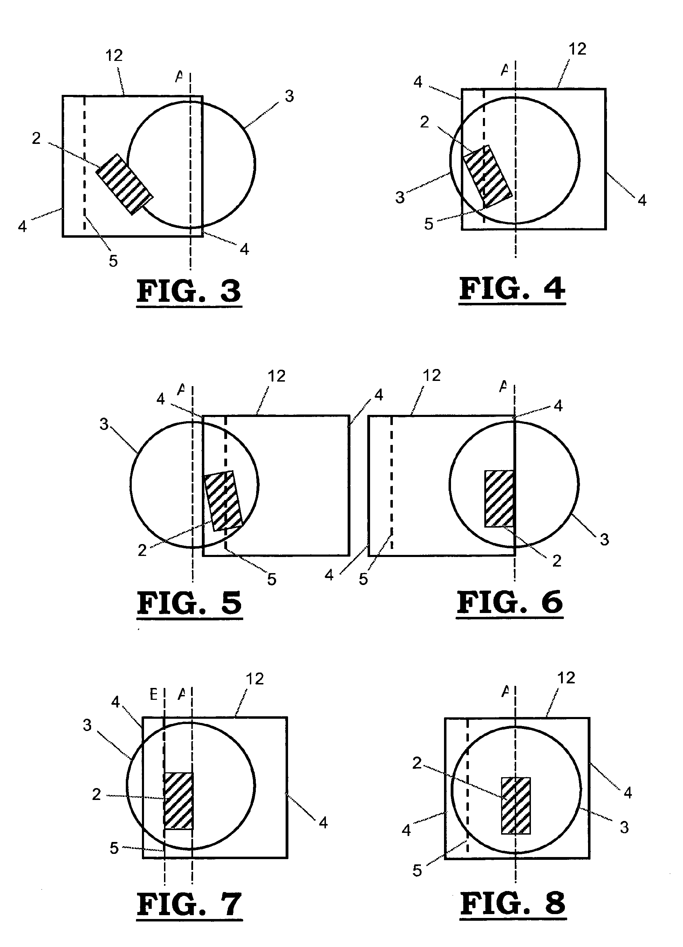

Un procédé de mesure et de positionnement d'un objet (2) qui présente les caractéristiques décrites plus haut à l'aide du dispositif (1) représenté dans les figures 1 et 2 a été représenté schématiquement dans les figures 3 à 12 incluses. Le détecteur de présence (5) y a été représenté schématiquement en représentant le rayon émis par un détecteur laser ou un détecteur à ultrasons.

La figure 3 montre comment une pièce (2) est amenée au moins en partie sur le plateau rotatif (3) dans l'étape 1 a. L'objet (2) est ici posé complètement sur sa surface de base.

Lorsqu'il est amené par exemple par le haut sur le plateau rotatif (3), cet objet (2) peut tout aussi bien se trouver en partie au-dessus du bâti (12) et au moins en partie sur le plateau rotatif (3). Dans ce cas, il faut une étape 1 b dans laquelle l'objet (2) est déplacé à l'aide du déplacement du bâti (12) et/ou de la rotation du plateau rotatif (3) jusqu'à ce qu'il repose sur sa surface de base. Dans un premier mode de réalisation de l'étape 1b, le plateau rotatif (3) peut tourner dans le sens des aiguilles d'une montre ou dans le sens contraire des aiguilles d'une montre pendant que le bâti (12) est déplacé en va-et-vient. Dans une deuxième variante de réalisation de l'étape 1b, le plateau rotatif (3) peut être tourné en va-et-vient dans le sens des aiguilles d'une montre et dans le sens contraire des aiguilles d'une montre pendant que le bâti (12) est déplacé vers la gauche ou vers la droite.

Lorsque l'objet (2) a ainsi été posé sur sa surface de base, il est déplacé dans une étape 1c à l'aide du déplacement des éléments de déplacement (4) et/ou de la rotation du plateau rotatif (3) jusqu'à ce qu'il se trouve complètement sur le plateau rotatif (3), ainsi qu'on l'a représenté dans la figure 4.

Ensuite, dans un mode de réalisation particulier de l'étape 2a, l'objet (2) est déplacé vers la droite à l'aide du bâti (12) jusqu'à ce qu'il vienne au-dessus du centre du plateau rotatif (3), ainsi qu'on l'a représenté dans la figure 5, suite à quoi l'objet (2) est déplacé vers la gauche dans la direction opposée à l'aide de ce bâti (12) jusqu'à ce que son premier côté soit situé le long de la ligne centrale du plateau rotatif qui sert de première ligne de référence (A), ainsi qu'on l'a représenté dans la figure 6. Cette ligne centrale est sélectionnée de manière à être parallèle aux côtés du bâti (12) par lequel l'objet (2) est manipulé. Par déplacement en va-et-vient de l'objet (2), on peut assurer sur une distance relativement courte sur le diamètre du plateau rotatif (3) que l'objet (3) qui forme d'abord un angle relativement grand par rapport à la première ligne de référence (A) vienne se placer le long de cette première ligne de référence (A) après le déplacement.

Le bâti (12) est alors de nouveau déplacé vers la droite jusqu'à ce que le détecteur de présence (5) enregistre le deuxième côté de la surface de base situé face au premier côté. Cela a lieu au moment où le faisceau que ce détecteur de présence (5) émet est interrompu par l'objet (2). Une deuxième ligne de référence (B) parallèle à la première ligne de référence (A) est ainsi définie dans l'étape 2b de la manière représentée dans la figure 7. Cette première ligne de référence (A) et cette deuxième ligne de référence (B) peuvent être définies à l'aide d'un logiciel, suite à quoi la distance entre la première ligne de référence (A) et la deuxième ligne de référence (B) est définie à l'aide d'un logiciel comme constituant la largeur de la surface de base, dans l'étape 2c.

Ensuite, ainsi qu'on l'a représenté dans la figure 8, l'objet (2) est déplacé jusqu'à ce que la surface de base de l'objet (2) soit symétrique par rapport à la première ligne de référence (A) qui forme en même temps la ligne centrale du plateau rotatif (3). De cette manière, après rotation du plateau rotatif (3), l'objet (2) sera toujours situé au centre de ce plateau rotatif (3), de sorte qu'il peut être manipulé de manière simple sans sortir du plateau rotatif (3).

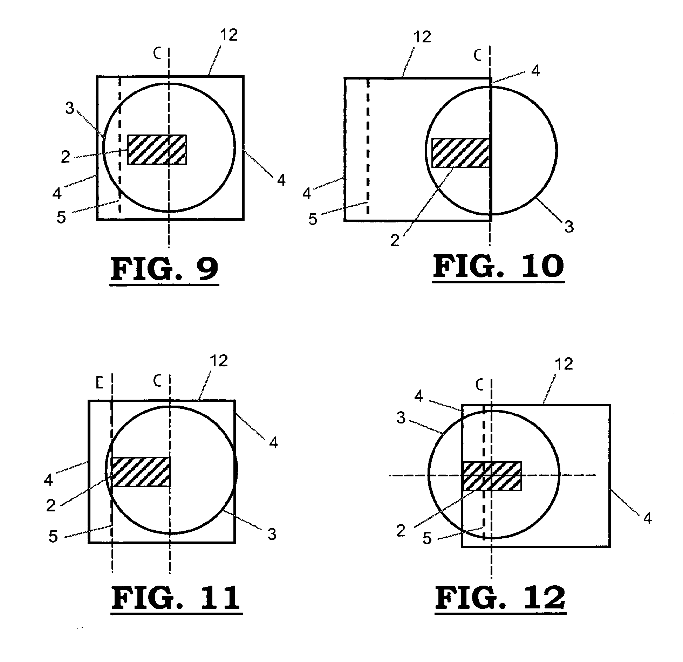

Au cours de l'étape 3, l'objet (2) est ensuite tourné d'un angle de sensiblement 90° à l'aide du plateau rotatif (3) de la manière représentée dans la figure 9. Lors de l'étape 4a, l'objet (2) peut ainsi être déplacé vers la gauche par un simple déplacement du coulissement du bâti (12) jusqu'à ce qu'un troisième côté de la surface de base cet objet (2) soit situé le long de la troisième ligne de référence (C) de la manière représentée dans la figure 10. Cette troisième ligne de référence (C) est ici la même ligne centrale du plateau rotatif (3) que la première ligne de référence (A). Pendant que l'objet (2) est tourné d'un angle compris entre 45° et 135° et différent de 90°, il faut une autre manipulation pour que ce troisième côté vienne se placer le long de cette ligne de référence (C). Cette manipulation peut être exécutée de manière similaire à ce que l'on a décrit plus haut à propos de l'étape 2a.

Lors de l'étape 4b, le bâti (12) est ensuite déplacé vers la droite jusqu'à ce que le détecteur de présence (5) enregistre le quatrième côté de la surface de base situé face au troisième côté. Une quatrième ligne de référence (D) qui est parallèle à la troisième ligne de référence (C) est ainsi définie dans l'étape 4b de la manière représentée dans la figure 11. Cette troisième ligne de référence (C) et cette quatrième ligne de référence (D) peuvent de nouveau être définies à l'aide d'un logiciel, la distance entre la troisième ligne de référence (C) et la quatrième ligne de référence (D) étant définie par le logiciel comme étant la longueur de la surface de base dans l'étape 4c.

L'objet (2) est alors placé au milieu du plateau rotatif (3) en le déplaçant à l'aide du bâti (12) de la manière représentée dans la figure 12.

Lorsque cet objet (2) se trouve alors au milieu, la hauteur de cet objet (2) peut être déterminée à l'aide du détecteur de hauteur (6) qui est placé fixement à une certaine hauteur au-dessus du centre du plateau rotatif (3).

Dans chacune des figures, on a représenté un objet (2) de forme parallélépipédique. Un homme du métier remarquera que le procédé décrit et le dispositif (1) décrit peuvent également être utilisés pour mesurer et positionner des objets (2) qui présentent les caractéristiques du préambule de la première revendication.

## Revendications

1. Procédé de mesure et de positionnement d'un objet (2) en forme de cube, de parallélépipède rectangle, de cylindre ou de prisme droit dont la surface de base est un polygone régulier à nombre pair de côtés, dans lequel les dimensions de l'objet (2) sont déterminées et dans lequel après la détermination de la longueur ou de la largeur de l'objet (2), l'objet (2) est tourné à l'aide d'un plateau rotatif (3) pour déterminer respectivement sa largeur ou sa longueur,
**caractérisé en ce que** ce procédé présente les étapes suivantes :
- étape 1 : placement de l'objet (2) sur sa surface de base sur un plateau rotatif (3),
- étape 2 : détermination de la longueur ou de la largeur de la surface de base par :
a. déplacement de l'objet (2) jusqu'à ce qu'un premier côté de sa surface de base vienne se placer le long d'une première ligne de référence (A),
b. détermination de la position du deuxième côté de la surface de base, situé face à ce premier côté, au moyen d'un détecteur de présence (5), une deuxième ligne de référence (B) parallèle à la première ligne de référence (A) et en contact à ce deuxième côté étant définie,
c. détermination de la distance entre la première ligne de référence (A) et la deuxième ligne de référence (B) comme longueur ou largeur de la surface de base,
- étape 3 : à l'aide du plateau rotatif (3), rotation de l'objet (2) d'un angle de rotation compris entre 45° et 135°,
- étape 4 : détermination respectivement de la largeur ou de la longueur de la surface de base par :
a. déplacement de l'objet (2) jusqu'à ce qu'un troisième côté de sa surface de base vienne se placer le long d'une troisième ligne de référence (C),
b. détermination de la position du quatrième côté de la surface de base, situé face à ce troisième côté, au moyen d'un détecteur de présence (5), une quatrième ligne de référence (D) parallèle à la troisième ligne de référence (C) et en contact avec ce quatrième côté étant définie,
c. détermination de la distance entre la troisième ligne de référence (C) et la quatrième ligne de référence (D) comme étant respectivement la largeur ou la longueur de la surface de base,
et en outre détermination de la hauteur de l'objet (2) à l'aide d'un détecteur de hauteur (6).

2. Procédé selon la revendication 1, **caractérisé en ce que** l'angle de rotation est sensiblement de 90°.

3. Procédé selon l'une des revendications 1 à 3 incluse, **caractérisé en ce que** l'étape 1 comprend les étapes partielles suivantes :
a. amenée au moins partielle de l'objet (2) sur le plateau rotatif (3),
b. à l'aide du déplacement de deux éléments de déplacement (4) qui se déplacent simultanément, qui sont prévus à distance constante l'un de l'autre et qui délimitent une zone rectangulaire plus grande que l'objet (2) à mesurer et positionner et/ou de la rotation du plateau rotatif (3), déplacement de l'objet (2) jusqu'à ce qu'il soit posé sur sa surface de base,
c. à l'aide du déplacement des éléments de déplacement (4) et/ou de la rotation du plateau rotatif (3), déplacement de l'objet (2) jusqu'à ce que l'objet soit entièrement situé sur le plateau rotatif (3).

4. Procédé selon l'une des revendications précédentes, **caractérisé en ce que** dans l'étape 2a et l'étape 4a, l'objet (2) est déplacé à l'aide de deux éléments de déplacement (4) qui se déplacent simultanément, qui sont prévus à distance constante l'un de l'autre et qui délimitent une zone rectangulaire plus grande que l'objet (2) à mesurer et positionner, les côtés de cette ouverture rectangulaire étant parallèles à la première ligne de référence (A) et à la troisième ligne de référence (C), jusqu'à ce que le premier côté ou le troisième côté de l'objet soit situé respectivement le long de la première ligne de référence (A) ou de la troisième ligne de référence (C).

5. Procédé selon la revendication 4, **caractérisé en ce que** dans l'étape 2a et l'étape 4a, l'objet (2) est déplacé à l'aide des éléments de déplacement (4) jusqu'au-dessus du centre du plateau rotatif (3) et est ensuite reculé dans la direction opposée jusqu'à ce que respectivement son premier ou son troisième côté soit situé le long de la ligne centrale du plateau rotatif (3) qui sert respectivement de première ligne de référence (A) ou de troisième ligne de référence (C). '

6. Procédé selon les revendications 4 ou 5, **caractérisé en ce qu'**après l'étape 2, l'objet (2) est déplacée à l'aide des éléments de déplacement (4) jusqu'à ce que la surface de base de l'objet (2) soit située symétriquement par rapport à la première ligne de référence (A).

7. Procédé selon l'une des revendications précédentes, **caractérisé en ce que** pendant les étapes 1 à 4 incluse, l'objet (2) est identifié à l'aide de moyens d'identification.

8. Procédé selon la revendication 7, **caractérisé en ce que** ladite identification consiste à lire à l'aide d'un lecteur de code à barres un code à barres prévu sur l'objet (2).

9. Procédé selon l'une des revendications précédentes, **caractérisé en ce que** si l'objet (2) a une forme parallélépipédique et si la hauteur mesurée est plus grande que la longueur mesurée et/ou la largeur mesurée, ce procédé contient l'étape supplémentaire qui consiste à culbuter cet objet (2) en faisant tourner l'objet (2) à l'aide du plateau rotatif (3) et en percutant l'objet (2) à l'aide des éléments de déplacement (4).

10. Procédé selon l'une des revendications 3 à 9 incluse, **caractérisé en ce que** lorsque lesdits étapes ont été exécutées, l'objet (2) est placé au milieu du plateau rotatif (3) en faisant tourner l'objet (2) à l'aide du plateau rotatif (3) et/ou en déplaçant l'objet (2) à l'aide des éléments de déplacement (4) de telle sorte que le sens de la longueur ou le sens de la largeur l'objet (2) soient parallèles à une ligne de référence (A, B, C, D).

11. Dispositif (1) de mesure et de positionnement d'un objet (2) en forme de cube, de parallélépipède rectangle, de cylindre ou de prisme droit dont la surface de base est un polygone régulier à nombre pair de côtés par un procédé selon l'une des revendications 1 à 10 incluse, **caractérisé en ce que** ce dispositif (1) comprend :
a. un dispositif d'amenée (7) qui amène sur le plateau rotatif (3) un objet (2) à mesurer et positionner,
b. un plateau rotatif (3) dont les dimensions sont telles que pendant les étapes 2 à 4 incluse du procédé, l'objet (2) se trouve sur ce plateau rotatif (3),
c. deux éléments de déplacement (4) qui se déplacent simultanément, qui sont prévus à distance constante l'un de l'autre et qui délimitent une zone rectangulaire plus grande que l'objet (2) à mesurer et positionner, et par lesquels cet objet (2) est déplacé, les côtés de cette ouverture rectangulaire étant parallèles à la première ligne de référence (A) et à la troisième ligne de référence (C),
d. un détecteur de présence (5) pour détecter la présence de l'objet (2) pendant l'étape 2b et l'étape 4b et
e. un détecteur de hauteur (6) pour déterminer la hauteur de l'objet (2).

12. Dispositif (1) selon la revendication 11, **caractérisé en ce que** lesdits éléments de déplacement (4) font également partie du dispositif d'amenée (7).

13. Dispositif (1) selon les revendications 11 ou 12, **caractérisé en ce que** lesdits éléments de déplacement (4) font partie d'un bâti (12).

14. Dispositif (1) selon l'une des revendications 11 à 13 incluse, **caractérisé en ce que** ledit détecteur de présence (5) est prévu fixement sur les éléments de déplacement (4).

15. Dispositif (1) selon l'une des revendications 11 à 14 incluse, **caractérisé en ce que** ledit détecteur de hauteur (6) est placé fixement à une certaine hauteur au-dessus du centre du plateau rotatif (3).

16. Dispositif (1) selon l'une des revendications 11 à 14 incluse, **caractérisé en ce que** ledit détecteur de hauteur (6) prévu sur les éléments de déplacement (4) est situé à une certaine hauteur au-dessus du plan du plateau rotatif (3).

17. Dispositif (1) selon l'une des revendications 11 à 16 incluse, **caractérisé en ce qu'**il contient des moyens d'identification pour identifier l'objet (2).

18. Dispositif (1) selon la revendication 17, **caractérisé en ce que** lesdits moyens d'identification comprennent un lecteur de codes à barres pour identifier l'objet (2) en lisant un code à barres prévu sur cet objet (2).

## Patentansprüche

1. Verfahren zum Messen und Positionieren eines Objekts (2) in Form eines Würfels, eines rechtwinkligen Quaders, eines Zylinders oder eines geraden Prismas, dessen Basisfläche ein regelmäßiges Vieleck mit einer geraden Anzahl von Seiten ist, bei dem die Abmessungen des Objekts (2) bestimmt werden und bei dem nach dem Bestimmen der Länge oder der Breite des Objekts (2) das Objekt (2) mittels einer Drehplatte (3) gedreht wird, um seine Breite bzw. seine Länge zu bestimmen,
**dadurch gekennzeichnet, dass** dieses Verfahren die folgenden Schritte umfasst:
- Schritt 1 : Platzieren des Objekts (2) auf seiner Basisfläche auf einer Drehplatte (3),
- Schritt 2: Bestimmen der Länge oder der Breite der Basisfläche durch:
a. Bewegen des Objekts (2), bis eine erste Seite seiner Basisfläche sich entlang einer ersten Referenzlinie (A) platziert,
b. Bestimmen der Position der zweiten Seite der Basisfläche, die dieser ersten Seite zugewandt ist, mittels eines Präsenzsensors (5), wobei eine zweite Referenzlinie (B), die zu der ersten Referenzlinie (A) parallel und mit dieser zweiten Seite in Kontakt ist, definiert wird,
c. Bestimmen der Distanz zwischen der ersten Referenzlinie (A) und der zweiten Referenzlinie (B) als Länge oder Breite der Basisfläche,
- Schritt 3: mittels der Drehplatte (3) Drehen des Objekts (2) um einen Drehwinkel, der zwischen 45° und 135° beträgt,
- Schritt 4: Bestimmen der Länge bzw. der Breite der Basisfläche durch
a. Bewegen des Objekts (2), bis eine dritte Seite seiner Basisfläche sich entlang einer dritten Referenzlinie (C) platziert,
b. Bestimmen der Position der vierten Seite der Basisfläche, die dieser dritten Seite zugewandt ist, mittels eines Präsenzsensors (5) wobei eine vierte Referenzlinie (D), die zu der dritten Referenzlinie (C) parallel und mit dieser vierten Seite in Kontakt ist, definiert wird,
c. Bestimmen der Distanz zwischen der dritten Referenzlinie (C) und der vierten Referenzlinie (D) als Länge bzw. Breite der Basisfläche,
und ferner Bestimmen der Höhe des Objekts (2) mittels eines Höhensensors (6).

2. Verfahren nach Anspruch 1, **dadurch gekennzeichnet, dass** der Drehwinkel im Wesentlichen 90° beträgt.

3. Verfahren nach einem der Ansprüche 1 bis 3, **dadurch gekennzeichnet, dass** Schritt 1 die folgenden Teilschritte umfasst:
a. zumindest teilweises Zuführen des Objekts (2) auf die Drehplatte (3),
b. mittels der Bewegung zweier Bewegungselemente (4), die sich gleichzeitig bewegen, die in konstanter Distanz voneinander vorgesehen sind und die eine rechtwinklige Zone begrenzen, die größer ist als das Objekt (2), das gemessen und positioniert werden soll, und/oder der Drehung der Drehplatte (3), Bewegen des Objekts (2), bis es auf seiner Basisfläche steht,
c. mittels der Bewegung der Bewegungselemente (4) und/oder der Drehung der Drehplatte (3) Bewegen des Objekts (2), bis sich das Objekt (2) vollständig auf der Drehplatte (3) befindet.

4. Verfahren nach einem der vorhergehenden Ansprüche, **dadurch gekennzeichnet, dass** in Schritt 2a und in Schritt 4a das Objekt (2) mittels zweier Bewegungselemente (4) bewegt wird, die sich gleichzeitig bewegen, die in konstanter Distanz voneinander vorgesehen sind und die eine rechtwinklige Zone begrenzen, die größer ist als das Objekt (2), das gemessen und positioniert werden soll, wobei die Seiten dieser rechtwinkligen Öffnung zu der ersten Referenzlinie (A) und zu der dritten Referenzlinie (C) parallel sind, bis die erste Seite oder die dritte Seite des Objekts entlang der ersten Referenzlinie (A) bzw. der dritten Referenzlinie (C) befindlich ist.

5. Verfahren nach Anspruch 4, **dadurch gekennzeichnet, dass** in Schritt 2a und Schritt 4a das Objekt (2) mittels zweier Bewegungselemente (4) bis oberhalb des Zentrums der Drehplatte (3) bewegt wird und anschließend in die Gegenrichtung zurückgezogen wird, bis seine erste bzw. seine dritte Seite entlang der Mittellinie der Drehplatte (3) befindlich ist, die als erste Referenzlinie (A) bzw. als dritte Referenzlinie (C) dient.

6. Verfahren nach Anspruch 4 oder 5, **dadurch gekennzeichnet, dass** nach Schritt 2 das Objekt (2) mittels der Bewegungselemente (4) bewegt wird, bis die Basisfläche des Objekts (2) relativ zu der ersten Referenzlinie (A) symmetrisch angeordnet ist.

7. Verfahren nach einem der vorhergehenden Ansprüche, **dadurch gekennzeichnet, dass** während der Schritte 1 bis 4 das Objekt (2) mittels Identifzierungsmitteln identifiziert wird.

8. Verfahren nach Anspruch 7, **dadurch gekennzeichnet, dass** die Identifizierung darin besteht, mittels eines Barcode-Lesers einen Barcode zu lesen, der auf dem Objekt (2) vorgesehen ist.

9. Verfahren nach einem der vorhergehenden Ansprüche, **dadurch gekennzeichnet, dass**, wenn das Objekt (2) eine Quaderform hat und wenn die gemessene Höhe größer als die gemessene Länge und/oder die gemessene Breite ist, dieses Verfahren den zusätzlichen Schritt umfasst, der darin besteht, dieses Objekt (2) umzukippen, indem das Objekt (2) mittels der Drehplatte (3) gedreht wird und indem das Objekt (2) mittels der Bewegungselemente (4) gestoßen wird.

10. Verfahren nach einem der Ansprüche 3 bis 9, **dadurch gekennzeichnet, dass**, wenn die Schritte durchgeführt wurden, das Objekt (2) in der Mitte der Drehplatte (3) platziert wird, indem das Objekt (2) mittels der Drehplatte (3) gedreht wird und/oder indem das Objekt (2) mittels der Bewegungselemente (4) bewegt wird, derart, dass die Richtung der Länge oder die Richtung der Breite des Objekts (2) zu einer Referenzlinie (A, B, C, D) parallel sind.

11. Vorrichtung (1) zum Messen und Positionieren eines Objekts (2) in Form eines Würfels, eines rechtwinkligen Quaders, eines Zylinders oder eines geraden Prismas, dessen Basisfläche ein regelmäßiges Vieleck mit einer geraden Anzahl von Seiten ist, durch ein Verfahren nach einem der Ansprüche 1 bis 10, **dadurch gekennzeichnet, dass** diese Vorrichtung (1) Folgendes umfasst:
a. eine Zuführvorrichtung (7), die ein Objekt (2), das gemessen und positioniert werden soll, auf die Drehplatte (3) zuführt,
b. eine Drehplatte (3), deren Abmessungen dergestalt sind, dass während der Schritte 2 bis 4 des Verfahrens sich das Objekt (2) auf dieser Drehplatte (3) befindet,
c. zwei Bewegungselemente (4), die sich gleichzeitig bewegen, die in konstanter Distanz voneinander vorgesehen sind und die eine rechtwinklige Zone begrenzen, die größer ist als das Objekt (2), das gemessen und positioniert werden soll, und durch die dieses Objekt (2) bewegt wird, wobei die Seiten dieser rechtwinkligen Öffnung zu der ersten Referenzlinie (A) und zu der dritten Referenzlinie (C) parallel sind,
d. einen Präsenzsensor (5), um die Präsenz des Objekts (2) während Schritt 2b und Schritt 4b zu erkennen, und
e. einen Höhensensor (6), um die Höhe des Objekts (2) zu bestimmen.

12. Vorrichtung (1) nach Anspruch 11, **dadurch gekennzeichnet, dass** die Bewegungselemente (4) auch Teil der Zuführvorrichtung (7) sind.

13. Vorrichtung (1) nach Anspruch 11 oder 12, **dadurch gekennzeichnet, dass** die Bewegungselemente (4) Teil eines Rahmens (12) sind.

14. Vorrichtung (1) nach einem der Ansprüche 11 bis 13, **dadurch gekennzeichnet, dass** der Präsenzsensor (5) ortsfest auf den Bewegungsmitteln (4) vorgesehen ist.

15. Vorrichtung (1) nach einem der Ansprüche 11 bis 14, **dadurch gekennzeichnet, dass** der Höhensensor (6) ortsfest in einer bestimmten Höhe oberhalb des Zentrums der Drehplatte (3) platziert ist.

16. Vorrichtung (1) nach einem der Ansprüche 11 bis 14, **dadurch gekennzeichnet, dass** der Höhensensor (6), der auf den Bewegungsmitteln (4) vorgesehen ist, in einer bestimmten Höhe oberhalb der Ebene der Drehplatte (3) befindlich ist.

17. Vorrichtung (1) nach einem der Ansprüche 11 bis 16, **dadurch gekennzeichnet, dass** sie Identifizierungsmittel zum Identifizieren des Objekts (2) umfasst.

18. Vorrichtung (1) nach Anspruch 17, **dadurch gekennzeichnet, dass** die Identifizierungsmittel einen Barcode-Leser umfassen, um das Objekt (2) zu identifizieren, indem sie den Barcode lesen, der auf dem Objekt (2) vorgesehen ist.

## Claims

1. A method for measuring and positioning an object (2) in the form of a cube, right parallelepiped, cylinder or right prism, the base surface of which is a regular polygon with an even number of sides, in which the dimensions of the object (2) are determined and in which, once the length or the width of the object (2) has been determined, the object (2) is turned with the assistance of a turntable (3) in order to determine respectively the width or the length thereof,
**characterised in that** said method has the following steps:
- step 1: placing the object (2) on the base surface thereof on a turntable (3),
- step 2: determining the length or the width of the base surface by:
a. displacing the object (2) until a first side of the base surface thereof is arranged along a first reference line (A),
b. determining the position of the second side of the base surface, located opposite said first side, by means of a presence detector (5), a second reference line (B) parallel to the first reference line (A) and in contact with said second side being defined,
c. determining the distance between the first reference line (A) and the second reference line (B) as the length or width of the base surface,
- step 3: with the assistance of the turntable (3), rotating the object (2) by an angle of rotation of between 45 ° and 135 °,
- step 4: determining respectively the length or the width of the base surface by:
a. displacing the object (2) until a third side of the base surface thereof is arranged along a third reference line (C),
b. determining the position of the fourth side of the base surface, located opposite said third side, by means of a presence detector (5), a fourth reference line (D) parallel to the third reference line (C) and in contact with said fourth side being defined,
c. determining the distance between the third reference line (C) and the fourth reference line (D) as being respectively the width or the length of the base surface,
and furthermore determining the height of the object (2) with the assistance of a height detector (6).

2. A method according to claim 1, **characterised in that** the angle of rotation is substantially 90°.

3. A method according to any one of claims 1 to 3, **characterised in that** step 1 comprises the following sub-steps:
a. at least partially conveying the object (2) onto the turntable (3),
b. with the assistance of displacement of two displacement elements (4) which move simultaneously, which are provided at a constant distance from one another and which define a rectangular zone larger than the object (2) to be measured and positioned and/or with the assistance of rotation of the turntable (3), displacing the object (2) until it is placed on the base surface thereof,
c. with the assistance of displacement of the displacement elements (4) and/or rotation of the turntable (3), displacing the object (2) until the object is entirely located on the turntable (3).

4. A method according to any one of the preceding claims, **characterised in that**, in step 2a and step 4a, the object (2) is displaced with the assistance of two displacement elements (4) which move simultaneously, which are provided at a constant distance from one another and which define a rectangular zone larger than the object (2) to be measured and positioned, the sides of said rectangular opening being parallel to the first reference line (A) and to the third reference line (C), until the first side or the third side of the object is located respectively along the first reference line (A) or the third reference line (C).

5. A method according to claim 4, **characterised in that**, in step 2a and step 4a, the object (2) is displaced with the assistance of the displacement elements (4) until it is above the centre of the turntable (3) and is then moved back in the opposite direction until respectively the first or the third side thereof is located along the centre line of the turntable (3) which acts respectively as first reference line (A) or third reference line (C).

6. A method according to claim 4 or claim 5, **characterised in that**, after step 2, the object (2) is displaced with the assistance of the displacement elements (4) until the base surface of the object (2) is located symmetrically relative to the first reference line (A).

7. A method according to any one of the preceding claims, **characterised in that**, during steps 1 to 4, the object (2) is identified with the assistance of identification means.

8. A method according to claim 7, **characterised in that** said identification involves reading, with the assistance of a barcode reader, a barcode provided on the object (2).

9. A method according to any one of the preceding claims, **characterised in that**, if the object (2) has a parallelepipedal shape and if the height measured is larger than the measured length and/or measured width, said method contains the supplemental step involving knocking over said object (2) by turning the object (2) with the assistance of the turntable (3) and striking the object (2) with the assistance of the displacement elements (4).

10. A method according to any one of claims 3 to 9, **characterised in that**, once said steps have been carried out, the object (2) is placed in the middle of the turntable (3) by turning the object (2) with the assistance of the turntable (3) and/or by displacing the object (2) with the assistance of the displacement elements (4) in such a manner that the length direction or the width direction of the object (2) is parallel to a reference line (A, B, C, D).

11. A device (1) for measuring and positioning an object (2) in the form of a cube, right parallelepiped, cylinder or right prism, the base surface of which is a regular polygon with an even number of sides, by a method according to any one of claims 1 to 10, **characterised in that** said device (1) comprises:
a. a conveying device (7) which conveys an object (2) to be measured and positioned onto the turntable (3),
b. a turntable (3), the dimensions of which are such that, during steps 2 to 4 of the method, the object (2) is located on said turntable (3),
c. two displacement elements (4) which move simultaneously, which are provided at a constant distance from one another and which define a rectangular zone larger than the object (2) to be measured and positioned, and by which said object (2) is displaced, the sides of said rectangular opening being parallel to the first reference line (A) and to the third reference line (C),
d. a presence detector (5) for detecting the presence of the object (2) during step 2b and step 4b and
e. a height detector (6) for determining the height of the object (2).

12. A device (1) according to claim 11, **characterised in that** said displacement elements (4) are also part of the conveying device (7).

13. A device (1) according to claim 11 or claim 12, **characterised in that** said displacement elements (4) are part of a frame (12).

14. A device (1) according to any one of claims 11 to 13, **characterised in that** said presence detector (5) is provided fixedly on the displacement elements (4).

15. A device (1) according to any one of claims 11 to 14, **characterised in that** said height detector (6) is placed fixedly at a certain height above the centre of the turntable (3).

16. A device (1) according to any one of claims 11 to 14, **characterised in that** said height detector (6) provided on the displacement elements (4) is located at a certain height above the plane of the turntable (3).

17. A device (1) according to any one of claims 11 to 16, **characterised in that** it contains identification means for identifying the object (2).

18. A device (1) according to claim 17, **characterised in that** said identification means comprise a barcode reader for identifying the object (2) by reading a barcode provided on said object (2).
